# EUROPEAN PATENT SPECIFICATION

(11) **EP 4 252 585 B1**
(45) Date of publication and mention of the grant of the patent: **01.10.2025**
(21) Application number: 23162579.9
(22) Date of filing: 17.03.2023
(51) Int. Cl.: A47B 47/04, F16B 12/46

(54) **COMPOSED ELEMENT**
ZUSAMMENGESETZTES ELEMENT
ÉLÉMENT COMPOSÉ

(30) Priority: 27.03.2022 IL 29173622
(43) Date of publication of application: 04.10.2023
(73) Proprietor: Unilin, BV, 8710 Wielsbeke (BE)
(72) Inventor: DE RICK, Mr. Jan, 8710 Wielsbeke (BE)
(74) Representative: Unilin Technologies

(56) References cited:
- WO-A2-2011/151758
- US-A1- 2019 045 921
- US-A1- 2019 289 999

## Description

This invention relates to a composed element, as well as to a corner connection which is applied herewith.

More particularly, the invention relates to a composed element which comprises at least two panel-shaped elements, which are coupled to each other, can be coupled to each other, respectively, at an angle. Herein, the invention relates to any form of composed element which comprises at least two or more panel-shaped elements, irrespective of the field of application, and irrespective of the fact whether the composed element substantially consists exclusively of the panel-shaped elements or whether these panel-shaped elements only form a part thereof.

Although the invention can be used in any application, it is intended in the first place for being applied in the furniture sector, with individual pieces of furniture as well as with built-in furniture, such as dressing furniture, room dividers and the like.

More particularly, the invention aims at connections between panel-shaped elements, which can be realized in a smooth manner and are suitable for being employed with furniture which is sold in dismantled condition and must be assembled by the buyer himself. Herein, this relates in the first place to so-called flat-pack furniture.

Still more particularly, the invention relates to a composed element which comprises two or more panel-shaped elements, which each comprise a coupling zone in which coupling parts are present in the form of a profile respectively extending in the longitudinal direction of the respective coupling zone, preferably in the form of a tongue and a groove, respectively, wherein these profiles allow that the panel-shaped elements can be coupled to each other in a locking manner and at an angle. Such composed element is known, amongst others, from document DE 20 2009 008 825 U1. The use of such profiles, which are provided in the panel-shaped elements themselves, for example by cutting or milling, and are made entirely or for the major part in one piece therewith, offers the advantage that no separate elements are necessary for connecting the panel-shaped elements at an angle, such as, for example, metal connection elements, or at least the use of such separate elements can be limited to a minimum. Another advantage thereof consists in that such profiles can be milled in a simple manner into the panel-shaped elements and that a continuous locking coupling can be realized along the entire corner connection. It is clear that such coupling, during coupling as well as thereafter, is subjected to forces.

US 2019/045921 A discloses another known composed element made of a wood-based material formed from a stack of glued together wood veneers.

Thus, the present invention aims in the first place at an alternative composed element, wherein, in accordance with preferred embodiments, a solution is offered to one or more of the problems associated with the composed elements of the prior art. In particular an improvement of a composed element of the type as described in US 2019/045921 A, is aimed at.

To this aim, the invention relates to a composed element according to claim 1.

Preferably, that said stack of wood veneers comprise an uneven number of adjacent wood veneers, preferably at least seven. With an uneven numbers of wood veneers a more stable sandwich construction of the respective stack can be reached.

Preferably, at least two adjacent wood veneers are positioned in said stack of wood veneers with their wood grain direction crosswise or perpendicular to one another. The so-called crosslinking of veneers in a stack may also add to the obtained stability of the stack and the profiles of the tongue and or groove formed therein.

Preferably, said wood-based material is a board material forming the basic structure of the respective panel-shaped element. Said wood-based material may be a so-called plywood board. Preferably, the respective board material forms at least 80% of the thickness of the respective panel-shaped element. Preferably, the respective board material forms the entire thickness of the respective panel-shaped element with the exception of possible decorative facing materials applied to one or more of the outer faces of said board material. When decorative facing materials are available at one or more of the outer faces of the board material, this may concern materials comprising a decorative, e.g. printed or otherwise colored, paper, such as a melamine impregnated paper, a decorative, e.g. printed or otherwise colored, plastic foil, such as a PVC (polyvinyl chloride), PP (polypropylene), PE (polyethylene) or PET (polyethylene terephthalate) foil, or materials comprising liquidly applied colorants, such as lacquers or prints formed directly on the board material whether or not with the intermediate of primers and/or background layers. In the absence of decorative facing materials, the outer faces of the board material, in particular the wood grain of the outer wood veneers of said stack, remain visible in the composed element, but may for example be varnished or oiled.

Preferably, both said tongue and groove are at least partially, preferably wholly, formed in wood-based material formed from a respective stack of wood veneers. In such case, preferably both panel-shaped elements comprise a respective wood-based board material forming the basic structure of the respective panel-shaped element.

According to the invention, said tongue comprises a first locking part for cooperation with a second locking part comprised in said groove, wherein the cooperation of the first and second locking part prevent the drifting apart of the tongue and groove, wherein, upon said cooperation a pair of contact surfaces is formed between said first and second locking part.

Preferably, at least one of said contact surfaces is substantially, essentially or wholly formed in a single wood veneer of said stack. According to the invention, at least 50 percent of said contact surface is formed in said single wood veneer, or most preferably at least 90 percent, or the whole contact surface is formed in said single wood veneer. By substantially forming said contact surface in only one wood veneer a smooth cooperation can be obtained wherein the risk that the interface between adjacent wood veneers negatively effects the cooperation is minimized. Indeed, different cutting conditions originate on such interfaces, and wood parts may be displaced or torn out at this location. Such undesired effects on the milling quality may interfere with the quality and stability of the joint.

Preferably, at least one of said contact surfaces is essentially or wholly formed in a wood veneer of said stack, wherein the wood grain direction of the respective wood veneer is parallel or about parallel to said contact surface. Herewith it is meant that the wood grain of the respective wood veneer is globally extending in the longitudinal direction of the respective coupling zone formed by the tongue and groove connection. Preferably at least 50 percent of said contact surface is formed in said wood veneer, or at least 90 percent, or the whole contact surface is formed in said wood veneer. By forming the contact surface in a wood veneer having the wood grain run parallel thereto allows for a smooth milling quality and a minimized risk of torn our or displaced wood parts of the respective wood veneer, such that a good connection between the tongue and groove can be expected.

Preferably, said first locking part is mainly formed on at least a first wood veneer and said second locking part is mainly formed on at least a second wood veneer, wherein said first wood veneer is positioned in its respective stack closer to the inner side of said angle, or closer to the inner corner formed by said two panel-shaped elements, than said second wood veneer is positioned in its respective stack. Preferably, both the first and second wood veneer are positioned in an odd position in said stack when counting from the inner corner. For example said first veneer may be in the first position, or forming an outer surface of its respective stack, while said second veneer may be in the third position, and thus forming an inner veneer of its respective stack. Thus, as exemplified above, said first wood veneer may be a wood veneer forming an outer surface of its respective stack, while said second wood veneer may be an inner veneer of its respective stack.

Preferably, at least one of said contact surfaces is at least partially, and preferably substantially, essentially or wholly formed in a wood veneer of N, A or B grade quality (as defined in accordance with ANSI/HPVA-1-1994). At least 50 percent of said contact surface is formed in said wood veneer, or most preferably at least 90 percent, or the whole contact surface is formed in said wood veneer. By choosing a higher quality grade of veneer to form the contact surface on, a good cooperation between the tongue and groove can be expected.

Clearly, it is preferred that one or both of said contact surfaces are formed on a veneer showing two or more of the properties listed above, or are, in other words, formed on
- a single wood veneer;
- a wood veneer having a wood grain direction parallel or about parallel to said contact surface; and/or
- a wood veneer having a N, A or B grade.

Preferably, said tongue consists of a split tongue, with, thus, at least a first part and a second part, as well as a slit located there between. Using a slit in the tongue allows optimizing the force needed for installation and the obtained connection force. Preferably at least one boundary surface of said slit is formed substantially, essentially or wholly in a single wood veneer of said stack and/or at least one boundary surface is substantially, essentially or wholly formed has a wood grain direction parallel or about parallel to said slit. Herewith it is meant that the wood grain of the respective wood veneer is globally extending in the longitudinal direction of the respective coupling zone formed by the tongue and groove connection.

At least 50 percent of said boundary surface is formed in said wood veneer, or most preferably at least 90 percent, or the whole boundary surface is formed in said wood veneer. Preferably said slit has at least two main boundary surfaces, namely an upper and a lower boundary surface connected by a proximally located third boundary surface. Preferably at least said two main boundary surfaces, and potentially said proximally located boundary surface, show the property that they are formed as mentioned above in a respective wood veneer.

Preferably, said stack of wood veneers comprises wood veneer of N, A or B grade quality (as defined according to ANSI/HPVA-1-1994) at at least one outer surface of said stack. In this way the outer surface can be used as a decorative surface of the composed element, or be straightforwardly finished with a decorative facing material as mentioned above.

According to a preferred embodiment the tongue consists of a split tongue, with, thus, at least a first part and a second part, as well as a slit located there between; and wherein at the outer side of at least said first part, the aforementioned first locking part is present, with the characteristic that the slit, seen in cross-section of the tongue, comprises at least one side or boundary surface, the course of which, seen in cross-section, deviates from the main direction belonging to the tongue. By making use of a slit, of which at least one side has a deviating course, the advantage is obtained that a parameter is created, which offers possibilities for optimizing such coupling. Preferably, the second part of the tongue is free from locking parts. This allows that the tongue, at the second part, always fits smoothly into the groove and the optimization of the engagement and locking can be realized practically exclusively via the second part. According to a variant, the second part of the tongue in fact shall comprise a locking part, which, however, then is less pronounced than the locking part present on the first part of the tongue.

According to still another preferred characteristic, the tongue and groove can be turned into each other, wherein the corner, from which they can be turned into each other, forms said inner corner, and, in the case is a slit is present in the tongue, preferably said first part is situated closest to the inner corner. This allows a smooth engagement by means of a turning movement.

It is preferred that the tongue is situated eccentrically in respect to the panel-shaped element on which it is provided, or in respect to the panel-shaped element in which it engages, such preferably in the direction of the herein aforementioned inner corner. Due to the eccentric arrangement, the tongue can be kept farther away from the outer corner, by which more material remains available at the outer corner and consequently a more solid construction is maintained there, by which the risk of breaking off of material parts is reduced. The eccentric arrangement towards the inner corner also allows to turn the tongue more smoothly into the groove.

When a slit is available, the tongue is preferably composed such that the first part of the tongue protrudes farther than the second part of the tongue. The advantage is that the first part then offers sufficient room for the locking part, whereas the second part is kept smaller in order to allow for a smooth turning movement and/or to be able to leave more material at the location of the groove.

According to the abovementioned preferred embodiment, it is preferred that at least the side of the slit which is situated on the first part has a course which deviates from the aforementioned main direction. By this, it is obtained that the features of the first part of the tongue, in respect to strength as well as to elasticity, can be influenced and that in this manner, the advantage is obtained that new parameters are created for the design engineer for realizing a coupling in function of the intended result. This is of great importance with the first part of the tongue, as it comprises the most important locking part, and as the elastic movability thereof, as well as the stability thereof, are determining for the good function and the strength of the coupling. More specifically, it is preferred that the aforementioned side towards inside in the slit substantially approaches the plane determined by the surface of the panel-shaped element which is situated on the same side as the first part of the tongue. Hereby, it is obtained that the end of the first part remains relatively solid and strong, which is beneficial for the strength of the locking part provided thereon, whereas towards inside more elasticity is created, which is of importance for creating a suitable elasticity by which the first part of the tongue and the pertaining locking part can be displaced. In that both features in this manner are determined on two different locations by the technical shape prevailing there, also the advantage is obtained that the design engineer can influence these features independently. It is clear that, whether or not in combination with the preceding characteristics, also at the side of the slit which is situated on the second part can be given a course which deviates from the aforementioned main direction. As such, this also offers the advantage that a new parameter is created which can be employed by a design engineer for optimizing the technical characteristics of the tongue and groove coupling in function of the desired effect. In this case, too, it is preferred that the respective side towards inside in the slit substantially approaches the plane determined by the surface of the panel-shaped element which is situated on the same side as the first part of the tongue. By such course, it becomes possible, amongst others, to realize the base of the second part relatively solid and thus also stable, however, keeping the tip thereof slim, such that more room is made at the height of this tip, by which this room then again can be used for making the tip of the first part more stable.

The sides which, as aforementioned, show a course deviating from the main direction, preferably extend substantially globally inclined, and more particularly straight-lined over the major part of their length. More particularly, it is preferred that the slit, globally seen, extends at an angle, preferably with parallel sides, more particularly made by an incision. This allows realizing such side, and even the entire slit, in a simple manner by a saw cutter. Such inclined slit having an even width over its length thus can combine at least three advantages, namely, the easy realization thereof; the optimization of the first part and the optimization of the second part.

Preferably, the slit extends deeper than the base of the tongue, and the side, sides, respectively, which preferably deviate from the main direction, will show such deviating course at least for the part of the slit reaching deeper than said base. **In** this manner, not only the protruding parts of the tongue are responsible for the behavior of the tongue during joining, but also the more inwardly located edge portion of the panel-shaped element now obtains an influence thereon, with the advantage that further freedom is available for the design engineer. Further, herein it is preferred that the side, sides, respectively, which deviate from the main direction, will show such deviating course at least for the part of the slit reaching deeper than said base. **In** combination therewith, it is also preferred that the distance with which the slit extends from said base, said closing plane, respectively, inwardly in the panel-shaped element is larger than the largest distance with which the tongue reaches up to outward of the closing plane and/or outward of its base.

It is noted that the tongue preferably is situated on the end wall edge of a panel-shaped element and that by a plane pertaining to the tongue, a plane has to be understood in which the respective panel-shaped element is located.

According to preferred embodiments, the composed element can also show one or more of the following characteristics:
- the tongue and groove have such a configuration that they can be put in each other by means of a snap movement;
- the tongue and the groove have such a profile that they can be brought into a mutually coupled condition by means of a turning movement as well as by means of a displacement towards each other, which displacement is preferably combined with a snap action;
- the tongue is made in one piece with a panel-shaped element;
- the groove is situated in the lateral face of a panel-shaped element;
- the groove is made in one piece in a panel-shaped element.

It is clear that the invention also relates to elements which are intended for forming, together with one or more other elements, a composed element according to any of the preceding aspects, wherein it is provided at least with a tongue or a groove as described herein above. The invention also relates to corner connections as such, which are realized as described herein above.

It is noted that in the aforementioned slit, an elastic element or filler can be present, for example, for supporting the elasticity of the movable first part.

According to a special embodiment, in the assembled condition of said two panel-shaped elements also an adhesive connection, more particularly a glue connection, is provided at the location of the corner connection, more particularly at the location of said profiles, i.e. at the tongue and groove cooperation. By the combination of a locking coupling with a glue connection, the advantage is created that initially a smooth and correct assembly is possible, whereas after hardening of the glue a particularly strong composed element is effected.

With the intention of better showing the characteristics of the invention, hereafter, as an example without any limitative character, some preferred embodiments are described, with reference to the accompanying drawings, wherein:
Figure 1 schematically represents a composed element according to the invention;
Figure 2, at a larger scale, represents a cross-section according to line II-II in figure 1;
Figure 3, at a larger scale, represents the part indicated by F3 in figure 2;
Figures 4 and 5 show two manners of realizing the connection of figure 3;
Figure 6, at a larger scale, represents the part indicated by F6 in figure 5; and
Figure 7 represents a cross-section according to line VII-VII in figure 4, exclusively of the panel comprising the groove.

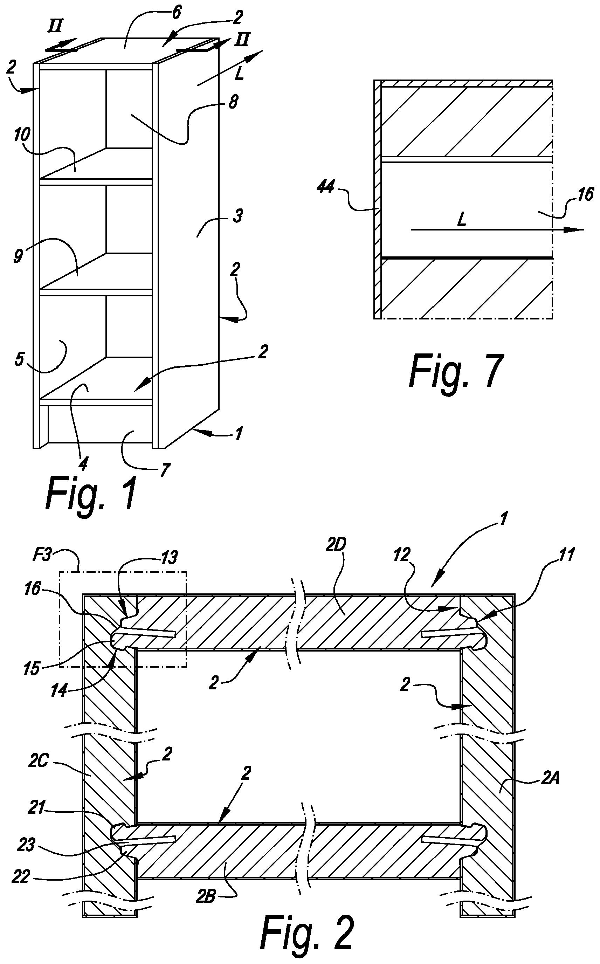

In figures 1 and 2, an example of a composed element 1 according to the invention is represented, in the form of a piece of furniture, more particularly a cabinet, which substantially is composed of panel-shaped elements connected to each other at an angle. The panel-shaped elements generally have the reference number 2, however, for distinction, are indicated by 2A, 2B, 2C and 2D, wherein, in the example, these form the right side wall 3, the bottom wall 4, the left side wall 5 and the top wall 6. Further, this piece of furniture comprises a skirting board 7, a back part 8 and two shelves 9-10.

As becomes clear from the different views of the figures 2 to 6, the respective panel-shaped elements 2 comprise coupling zones 11-12 in which coupling parts 13-14 are present in the form of a profile respectively extending in the longitudinal direction L of the respective coupling zone, wherein these profiles allow that each time two panel-shaped elements 2 can be coupled to each other in a locking manner and at an angle. In the represented example, herein use is made of coupling parts 13-14 with profiles in the form of a split tongue 15, which cooperates with a groove 16. Such type of corner connections with coupling parts, which as such make use of a split tongue and a groove, are known as such already from DE 20 2009 008 825 U1.

More particularly, the coupling parts 13-14 substantially are realized as profiles in the form of a tongue 15 and a groove 16, which comprise locking means 17-18, which, in the coupled condition, counteract the moving apart of the tongue 15 and groove 16, more particularly prevent it. As represented, these first and second locking parts 17-18 preferably are realized as ribs or edges, which form part of said profiles.

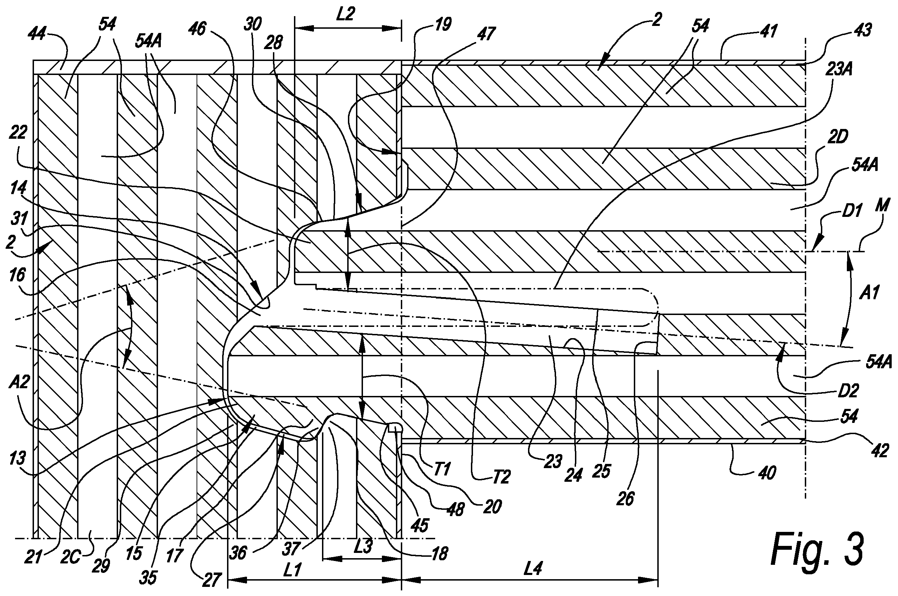

It is represented herein that the tongue 15 respectively is situated on a distal end 19 of the respective panel-shaped element 2, more particularly 2D in figure 3, whereas the groove 16 is situated in the lateral face 20 of the other panel-shaped element 2, more particularly 2C in figure 3, in other words, in one of the large surfaces thereof. In the example, the coupling zone 11 then is formed by the small end edge of the respective panel-shaped element on which the tongue is situated. The coupling zone 12 then respectively consists of a zone of the other panel-shaped element against which said small end edge of such panel-shaped edge adjoins.

The tongue 15 consists of a split tongue, with thus at least two parts 21-22 and a slit 23 situated there between. The slit is bordered by the main boundary surfaces or sides 24 and 25, which are situated respectively on the parts 21 and 22, as well as by a proximally located boundary surface or bottom 26. Said two parts 21 and 22, which herein below are denominated first part 21 and second part 21, respectively, in the represented example have a different length, L1 and L2, respectively.

It is noted that according to not represented variants, the tongue may also consist of only one part, i.e. without slit 23.

The outer sides 27-28 of the parts 21-22 represented in the figures cooperate with the side walls 29-30 of the groove 16. Further, the groove 16 has a bottom wall 31. As represented, this bottom wall in respect to shape preferably is adapted to the different lengths L1 and L2 and thus shows a deeper part 32 and a less deep part 33, by which extra material 34 is retained at the location of the less deep part 33. Retaining such material part 34 is less important for T-connections, however, is indeed of importance with single-fold corner connections in order to keep in this manner a more stable whole and to avoid the risk of a lateral breaking off of the material bordering the groove. Therefore, it is preferred that the parts 32 and 33 of the bottom wall 31 in the coupled condition preferably remain not more than 2 mm removed from the farthest distal ends of the parts 21 and 22, in other words, follow the global shape of the tongue 15.

In the side wall 29, a recess 35 is formed, such that the part situated in front of it functions as second locking part 18. The first and second locking parts 17 and 18 define a pair of contact surfaces 36-37 that are cooperating locking surfaces.

The first locking part 17 is situated on said first part 21 of the tongue.

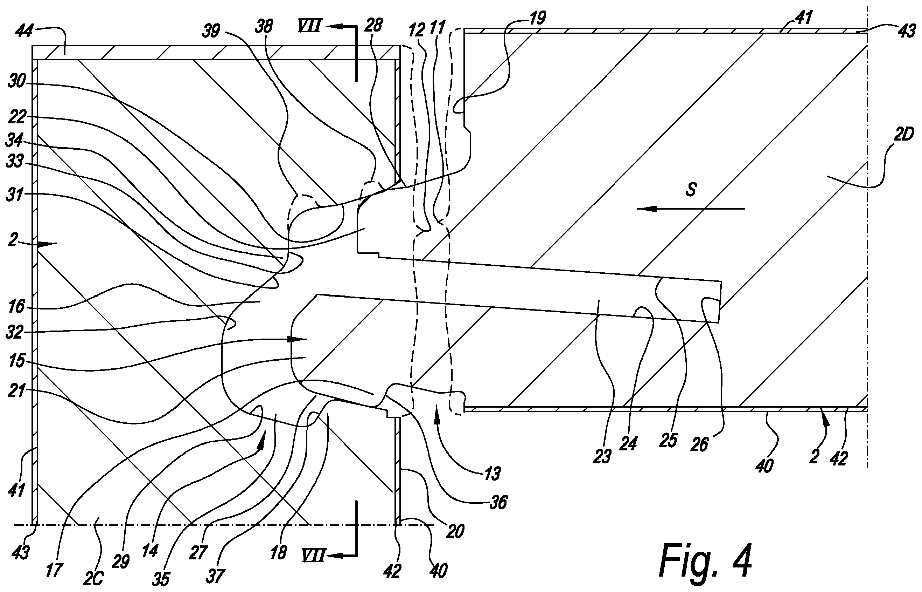

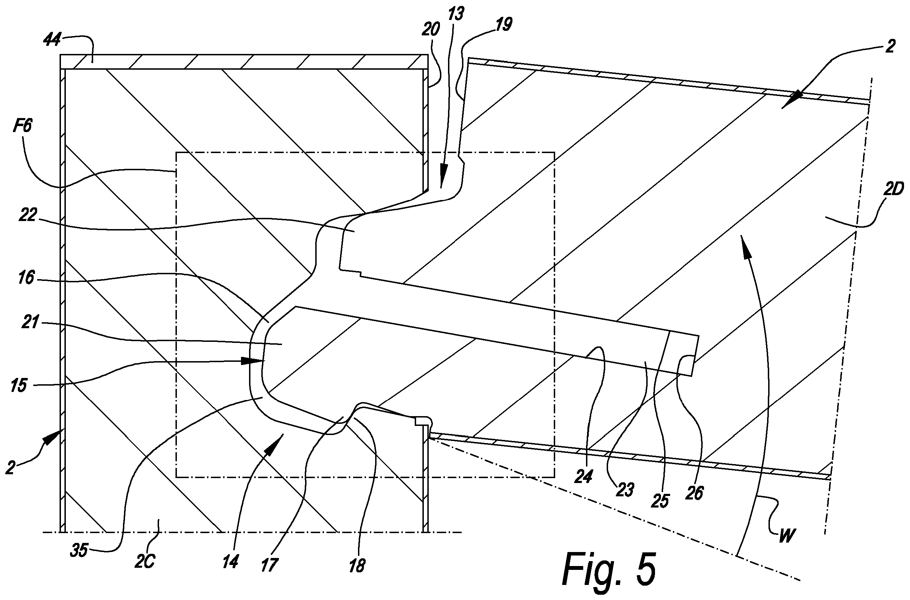

It is noted that the first part 21, as represented in the figures, is provided with said first locking part 17, whereas the second part 22, as represented, preferably is free from a locking part. Such composition allows that the tongue, as represented in figure 5, can be turned easily into the groove, with a turning movement W, without generating large forces in the coupling parts. However, the invention does not exclude that a locking part is also present on the second part 22, which preferably then is less pronounced than the first locking part 17. Such less pronounced or thus smaller locking part is represented as an example in dashed line in figure 4 and indicated by reference number 38, wherein this locking part is realized as a local protrusion, which can cooperate with a recess 39, which also is illustrated in dashed line.

The slit 23 of the example, seen in cross-section of the tongue 15, comprises at least one side or main boundary surface, of which the course, seen in cross-section, deviates from the main direction D1 pertaining to the tongue, and preferably extends at an angle in respect to said main direction D1. In the represented example, even both main boundary surfaces 24 and 25 are realized inclined, in the example parallel to each other, such that the slit 23 in the tongue, globally seen, extends inclined in respect to said main direction.

Herein, the main boundary surface 24, which borders the first part 21 of the tongue 15, globally seen extends in such a direction inclined in respect to said main direction D1 that this side 24, from the distal end of the slit 23 to the proximal end, approaches the surface 40 which is situated on the same side as the first part 21 of the split tongue, in other words, in such a direction inclined that the first part 21 and/or the part of the panel-shaped element on which the first part 21 is provided, globally becomes thinner towards the proximal end, in comparison to embodiments wherein the slit 23 would not be inclined. It is clear that hereby, the first part 21 is elastically displaceable in a relatively smooth manner.

The main boundary surface 25 of the slit 23 which borders the second part 22, globally seen extends inclined in respect to said main direction D1, such that this side, from the distal end of the slit 23 towards the proximal end, becomes distant from the surface 41 which is situated on the same side as the second part 22, or, in other words, this main boundary surface 25 extends away in an inclined manner in the same direction as the main boundary surface 24. In the represented example, this contributes to that the base of the first part 22 becomes more solid and stable.

Herein, the whole is designed such that the first part 21, and in particular the first locking part 17 thereof, is elastically displaceable in a smoother manner than the second part 22, which latter rather is rigid. The smooth elastic displacement of the first locking part 17 is obtained in that the first part 21 as such is longer than the second part 22, but even more in that the first part 21 adjoins to and is carried by a thin material part, cut free by means of the slit 23, of the panel-shaped element 2D, namely, the part of the actual panel-shaped element situated between the main boundary surface 24 of the slit 23 and the surface 40. In that the main boundary surface 24 extends inclined in the represented direction, a relatively thin material part is retained next to the most inwardly situated end of the slit 23, which moreover is situated at a relatively large distance of the first locking part 17, which promotes a smooth elastic bending at the height of this material part.

It is clear that by the "slit" both the part has to be understood which divides the tongue and the deeper extension thereof in the panel-shaped element.

The global direction of the main boundary surface 24 and/or the global or average direction D2 of the slit 23 in the example deviate from the main direction D1 over an angle indicated by A1. The size of this angle preferably is situated between 2 and 20 degrees. With a coupling having a normal strength, preferably angles A1 between 2 and 8 degrees will be used, and preferably in the order of magnitude of 4 degrees. When a less stiff coupling is desired, in other words, a coupling which can be smoothly snapped together, preferably use will be made of angles A1 of 8 to 20 degrees. It is clear, that in general, the slit 23 need not necessarily be inclined, but can be horizontal, or even absent.

In the represented example, the tongue 15 is situated at the small face of the respective panel-shaped element. Herein, by the main direction D1 belonging to the tongue, the direction has to be understood of the plane in which the panel-shaped element 2D is located.

As represented, the tongue 15 is situated eccentrically in respect to the center plane M of the panel-shaped element on which it is situated, wherein the composed element 1, at least at the side towards which the tongue is eccentrically displaced, forms an inner corner between the panel-shaped elements. More particularly, the tongue, globally seen, is situated out of the center of the panel-shaped element 1 in such a manner that it is situated closer to the side located against the inner corner 22 than to the opposite side.

The tongue 15 is fitting into the groove 16 by means of a turning movement W, such as illustrated in figure 5, wherein the turned-in panel-shaped element, in this case 2B, in right-angled condition, obtains its end position. The turning movement W takes place along the side of the inner corner of the represented composed element. Releasing both panel-shaped elements either takes place by a turning movement in opposite direction, or by pulling or tapping the panel-shaped elements out of each other in a direction parallel to the tongue.

It is noted that the panel-shaped elements can also be joined together by means of a snap movement, by displacing the panel-shaped elements by means of a mutual translation movement S, as illustrated in figure 4.

Herein, the tongue 15 fits into the groove 16 by means of a snap movement, such by pressing the respective panel-shaped element with the tongue 15 in its plane towards the groove 16. **In** the represented embodiment, this is achieved in that the first locking part 17 can perform a lateral elastic movement, possibly in combination with a slight elastic compression in the material of the two locking parts 17-18, and this first locking part 17 in this manner can engage behind the second locking part 18, this all whether or not combined with some more compression in the material of tongue and groove.

Preferably, the slit 23 has a width which is equal to or larger than the maximum lateral displacement performed by the first locking element 17 in respect to the panel-shaped element, to which it belongs, during the snapping together.

Further, the entrance of the groove 16 has a small insertion angle A2, which preferably is smaller than 40 degrees and still better is in the order of magnitude of 30 degrees.

Globally seen, the tongue is made conical, with conical sides formed by the outer side of the second part 22 and the outer side of the locking part of the first part 21.

It is clear that the examples represented in the figures represent a tongue 15 and a groove 16 which are configured such that they can be brought into each other by means of a snap movement via a translation, as well as by means of a turning movement, thus, in two manners, such at choice of the installing person. This becomes clear from figures 4 and 5, which respectively show the two coupling techniques for the same form of tongue and groove.

As represented, the tongue 15 and the groove 16 preferably are realized in one piece in the panel-shaped elements, for example, by means of milling treatments. Herein, the tongue 15 is situated on the small face of the respective panel-shaped element, whereas the groove is provided in the side of the respective panel-shaped element.

As represented in the figures, the panel-shaped elements preferably are formed of a board material, with preferably on both sides a decorative facing material, 42 and 43, respectively. This preferably relates to a melaminated board, thus, a board which is provided with a laminate covering. In particular, the laminate layer shall comprise at least of a printed or otherwise colored paper layer provided with resin and pressed on the board, whether or not in combination with other layers. Examples hereof are HPL (High Pressure Laminate) or DPL (Direct Pressure Laminate). Also, a film, lacquer layer or the like can be applied, or any other form of decorative facing material.

On the edges, the panel-shaped elements can be provided with a finishing tape 44, for example, a laminate tape or a finishing tape of synthetic material, for example, an ABS tape. Figures 1 and 7 also show that the ends of the tongues and grooves can be hidden from view by means of such finishing tape, by letting such finishing tape continue over the distal ends of the groove 16, in other words, by providing for a straight tape covering, in such a manner as described in DE 20 2009 008 825 U1. Such tape covering is performed at the manufacturer's.

In the represented example also a particular distribution of support points 45-46 is applied, such in combination with a slit 23 which extends at least deeper than the protruding parts of the tongue, in other words, to beyond the closing plane 47. Herein, the first contact point is defined as being the contact, situated closest to the closing plane 47, between the groove and the first part 21 of the tongue 15, whereas the second contact point 46 is defined as being the contact, situated most distant from the closing plane 47, between the groove and the second part 22 of the tongue. The particularity consists in that the first contact point 45 is situated closer to the closing plane 47 than the second contact point 46. Hereby, on the one hand, a better force distribution is obtained for forces in the coupling. Also, it is obtained that in intermediate positions when assembling a piece of furniture, wherein one panel-shaped element is put down with the groove 16 upwards, whereas another panel-shaped element is provided therein directed with the tongue 15 downwards, it is obtained that this second panel is not so fast inclined to fold down, even if one lets it go.

It is noted that in the coupled condition, the closing plane 47 usually consists of the plane coinciding with the panel surface 40 in which the groove 16 ends.

As represented, on the entrance of the groove 16, at the side from which the tongue is turned into the groove, a preferably angular cut-out 48 can be realized on the edge 49, which allows a smoother turning-in.

In the example, the lengths of the first part 21 and the second part 22 of the tongue 15 are indicated with L1 and L2, respectively, whereas the distance by which the center of the closing plane 37 is situated within the surface of the respective board is indicated by L3. The tongue 15 is slit and a first locking part 17 is present on the outer side of the first part 21, whereas on the outer side of the second part, a less pronounced and preferably even no locking part is present. The second part 22 of the tongue 15 protrudes with a length L2 out of the closing plane 47, which is smaller than 0.75 times the length L1 by which the first part 21 of the tongue 15 protrudes out of the closing plane 47. By respecting this ratio, the advantage is obtained that the tongue, on the one hand, can be smoothly turned in, as the second part, relatively seen, does not hinder too much, whereas on the first part indeed such engagement and locking can be realized. Also, the less deeply situated part of the bottom wall of the groove proportionally then can be performed even less deep, by which the wall of the groove becomes particularly sturdy.

The slit 23 reaches so deep that it extends to beyond the closing plane 47, and further in that the second part 22 of the tongue 15 protrudes with a length L2 out of the closing plane 47 which is smaller than 1.5 times the average distance L3 by which the pair of contact surfaces 36-37 are situated from the closing plane. Hereby, it is obtained that the distance by which the second part 22 protrudes, is restricted in respect to the location where the first part 21 engages. By this restriction, it is excluded that a part 22 protruding too far will be experienced as inconvenient during coupling. In order to guarantee a stable coupling, the length L2 preferably then is larger than L3.

The part of the first part 21 which extends between the closing plane 47 and the locking surfaces 36-37, shows an average thickness which is larger than the average thickness T2 of the second part 22. It is clear that by such proportion, starting from the same overall thickness of the tongue 15, it is obtained that the first part 21 becomes more solid and stable, which is important in view of the fast that it carries the first locking part 17 and thus is considerably loaded in respect to forces.

It is noted that T1 preferably is the average thickness of the part which extends over the distance L1 and/or the thickness thereof measured halfway the length L, whereas T2 is the average thickness of the second part 22 and/or the thickness thereof measured halfway the length L2. Both possibilities can be applied, depending on the criteria the manufacturer wants to use.

The depth, in other words, the distance L4, with which slit 23 reaches from the closing plane 47 inwards into the panel-shaped element 2, is larger than the largest distance L1 with which tongue 15 reaches out of the closing plane. It is clear that this is beneficial to the movability of the first part 21. Moreover, the occurring deformations thereby can be transferred more towards the back, such that the tip of the first part 21 is less loaded in respect to deformations at the location of the first locking part 17.

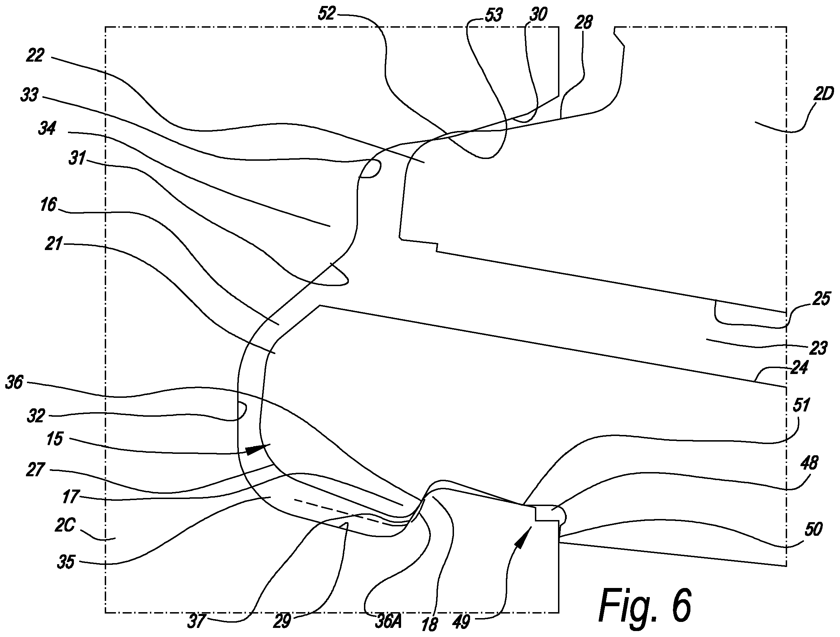

The tongue and the groove have such configuration that when turning into each other, towards the end of the turning-in movement, a force peak has to be overcome, such that also when turning out of each other again, a force has to be overcome, such with a turning movement wherein contact is held next to the edge 49, as indicated by contact points 50 and 51 in figure 6. **In** this manner, it is obtained that holding means or blocking means are integrated in the coupling itself, which then provide at least for a deceleration effect which counteracts the turning out of each other of the tongue and groove and, thus, of the panel-shaped elements. This then is also useful during assembly, in order to prevent, as aforementioned, that in certain intermediate positions during the assembly of a piece of furniture, one panel-shaped element, which then temporarily is provided upright in another, will fold down in respect to the other.

As illustrated in figure 6, this can be realized by providing, on the tongue at the side thereof where no locking part is present, a part 52 which, during the turning into or out of each other, theoretically overlaps with a part 53 on the groove, such that a force, more particularly a deformation force, at a dead point has to be overcome.

According to an alternative, which also is represented in figure 6, the tongue and groove, at the height of the locking parts, can comprise parts which, by a theoretical overlap 36A, during turning provide for that a deformation force has to be overcome at a dead point.

Also, the profiles can be performed such that in the coupled condition, a tension force remains, in particular a so-called pretension.

It is clear that said coupling can be applied on various locations on a composed element, such as a piece of furniture, for realizing a corner connection, either a usual corner connection or a T-connection, or even cross-shaped connection. However, this does not mean that all corner connections of such composed element have to be realized as such.

Figure 3 clearly shows that, in accordance with the invention, at least one of said tongue 15 or said groove 16 is at least partially formed in wood-based material formed from a stack of glued together wood veneers 54-54A. In the example, the stack of wood veneers 54-54A comprise an uneven number of adjacent wood veneers 54-54A. In this case nine wood veneers 54-54A. Adjacent wood veneers 54-54A are positioned in said stack of wood veneers 54-54A with their wood grain direction crosswise or perpendicular to one another. In Figure 3 this is shown by means of the applied hatching. The hatched wood veneers have their wood grain running in the longitudinal direction L, i.e. in perpendicular direction to the plane of the figure, while the non-hatched wood veneers 54A have their wood grain running in the plane of the figure.

From figure 3, it is clear that in the example said wood-based material is a board material forming the basic structure of the respective panel-shaped element 2. As illustrated here both said tongue 15 and groove 16 are at least partially, preferably wholly, formed in wood-based material formed from a respective stack of wood veneers 54-54A. At least one of said contact surfaces 36-37, in this case both contact surfaces 36-37 are substantially, and in this case wholly formed in a single wood veneer 54-54A of said stack.

The contact surface 36 formed on the first locking part 17 is at least partially, and in this case wholly formed in a wood veneer 54 of said stack, wherein the wood grain direction of the respective wood veneer 54 is parallel or about parallel to said contact surface 36.

The first locking part 17 is formed on a first wood veneer 54 and said second locking part 18 is formed on a second wood veneer 54A, wherein said first wood veneer 54 is positioned in its respective stack closer to the inner side of said angle, or inner corner formed by said two panel-shaped elements 2, than said second wood veneer is positioned in its respective stack. More particularly, said first wood veneer is a wood veneer 54 forming an outer surface of its respective stack, while said second wood veneer is an inner veneer 54A of its respective stack, and is positioned as a second veneer starting from said inner corner.

At least one of said contact surfaces 36-37, and in this case both contact surfaces 36-37, are wholly formed in one or more wood veneers 54-54A of N, A or B grade quality (as defined in accordance with ANSI/HPVA-1-1994).

At least one of the main boundary surfaces 24-25 of the slit 23, and in this case both main boundary surfaces 24-25 and even the proximally located boundary surface 26, are substantially, and in this case each wholly formed in a single wood veneer 54-54A of said stack. The lower main boundary surface 24 and the proximally located boundary surface 26 or bottom of the slit 23, are realized in a wood veneer 54 having a wood grain direction in parallel therewith. It is clear that the slit 23 runs in the longitudinal direction L along the coupling zone, as does the wood grain of the wood veneer 54 in which the lower main boundary surface 24 is realized.

Figure 3 further shows that said stack of wood veneers comprises wood veneer 54 of N, A or B grade quality (as defined according to ANSI/HPVA-1-1994) at at least one, and in this case at both, outer surfaces of said stack.

It is clear that all figures are representations of the same embodiment, and that the stack of wood veneers as described and illustrated in figure 3, is present, though not illustrated in the same detail in the other figures.

It is noted that the invention in particular aims at embodiments wherein the tongue as such provides for the coupling effect, and wherein thus the tongue remains free from external elements which, during coupling, effect on the tongue, such as a wedge or the like, which is driven into the slit of the tongue, for example, as known, amongst others, from US 7.654.055. In fact, the tongue as such can comprise elements which belong fixedly to the tongue and which can support the coupling force supplied by the tongue, such as, for example, an elastic strip or mass which is provided in the slit of the tongue.

Further, it is noted that, where applicable, the invention is not limited to corner connections which, in the assembled usage condition, extend in horizontal directions, however, may also be applied for corner connections which extend in other directions, for example, the vertical direction. An example of a connection extending in vertical direction, by which is meant that the coupling zones extend in vertical direction, is obtained, for example, when two side walls of a cabinet are connected to a back wall by means of a corner connection of the present invention, analogous as illustrated in figures 54-55 of the aforementioned DE 20 2009 008 825 U1.

It is noted that by the term "coupling zone" applied herein above, the part of a panel-shaped element has to be understood in which said profile, for example, groove profile or tongue profile, extends. Herein, this may relates to an edge zone, thus, a zone situated on or in the direct proximity of an edge of the panel-shaped element, as well as a zone which clearly is remote from the edge of a panel-shaped element, for example, when this zone is intended for forming a T-coupling between panel-shaped elements.

It is also noted that according to the invention, by a "composed element" an element has to be understood in "composed" as well as in "still to be composed" condition. This then also means, for example, that a not yet assembled and still packaged flat-pack piece of furniture, which in the assembled condition shows one or more characteristics of the invention, also already has to be considered a "composed element".

When it is stated that a side or main boundary surface of the slit has a deviating course, by this in fact an essential part of the side of the slit is meant and thus, for example, no rounded part, inclined part or the like at the beginning or end of the slit.

It is noted that by a "locking surface" possibly also a line contact can be understood.

By a side or main boundary surface which extends deviating from the main direction D1, also a side can be understood which has a stair-shaped course. Also, for example, the main boundary surface 24 may run parallel to the direction D1 over the major part, in order to bend off only next to the deepest end or proximally located boundary surface of the slit towards the surface 40.

It is self-evident that embodiments of the invention do not necessarily have to possess a tongue 15 with a slit or inclined-running slit 23. In such case, the slit, for example, may also run parallel to the respective main direction D1, for example, as indicated by dashed line 23A in figure 3.

It is clear that by "mechanically locking coupling parts", coupling parts have to be understood which provide for that in the assembled condition a locking is effected wherein the panel-shaped elements in their normal assembled mutual condition thus cannot get apart from each other without overcoming a certain force.

Generally, it is noted that the coupling parts 13-14, preferably including the first and second locking parts 17-18, preferably are made in one piece of the material of the panel-shaped element.

The invention also relates to the individual components for realizing a composed element according to the invention, such as, for example, the side walls of a cabinet or drawer as such.

The present invention is in no way limited to the embodiments described by way of example and represented in the figures; on the contrary may such composed elements, and more particularly the parts thereof which provide for the realization of said aspects, be realized according to various variants without leaving the scope of the invention as defined by the appended claims.

## Claims

1. Composed element which comprises at least two panel-shaped elements (2), which, by means of a locking tongue (15) and groove (16) connection, can be coupled to each other at an angle, wherein said connection comprises, at least at one of the panel-shaped elements (2), a tongue (15) or groove (16), which can cooperate with a groove (16) or tongue (15) provided on the other panel-shaped element (2),
wherein in the assembled condition a locking is effected wherein the panel-shaped elements (2) in their normal assembled mutual condition cannot get apart from each other without overcoming a certain force, and wherein both said tongue (15) and said groove (16) are wholly formed in wood-based material formed from a stack of glued together wood veneers (54-54A), and wherein said tongue (15) comprises a first locking part (17) for cooperation with a second locking part (18) comprised in said groove (16), wherein the cooperation of the first locking part (17) and the second locking part (18) prevent the drifting apart of the tongue (15) and groove (16), wherein upon said cooperation a pair of contact surfaces (36-37) is formed between said first locking part (17) and said second locking part (18); and
**characterised in that** at least 50 percent of at least one of said contact surfaces (36-37) is formed in a single wood veneer (54-54a) of said stack.

2. Composed element according to claim 1, **characterized in that** said stack of wood veneers (54-54A) comprise an uneven number of adjacent wood veneers, preferably at least seven.

3. Composed element according to claim 1 or 2, **characterized in that** at least two adjacent wood veneers (54-54A) are positioned in said stack of wood veneers with their wood grain direction crosswise or perpendicular to one another.

4. Composed element according to any of the preceding claims, **characterized in that** said wood-based material is a board material forming the basic structure of the respective panel-shaped element (2).

5. Composed element according to any of the preceding claims, **characterized in that** at least one of said contact surfaces (36-37) is essentially or wholly formed in a single wood veneer (54-54A) of said stack.

6. Composed element according to claim 5, **characterized in that** the wood grain direction of the respective wood veneer (54) is parallel or about parallel to said contact surface (36).

7. Composed element according to any of the preceding claims, **characterized in that** said first locking part (17) is formed on a first wood veneer (54) and said second locking part (18) is formed on a second wood veneer (54A), wherein said first wood veneer is positioned in its respective stack closer to the inner side of said angle, or inner corner formed by said two panel-shaped elements (2), than said second wood veneer is positioned in its respective stack.

8. Composed element according to claim 7, **characterized in that** said first wood veneer is a wood veneer forming an outer surface of its respective stack, while said second wood veneer is an inner veneer of its respective stack.

9. Composed element according to any of the preceding claims, **characterized in that** at least one of said contact surfaces (36-37) is essentially or wholly formed in a wood veneer (54-54A) of N, A or B grade quality as defined in accordance with ANSI/HPVA-1. 1994.

10. Composed element according to any of the preceding claims, **characterized in that** said tongue (15) consists of a split tongue, with, thus, at least a first part and a second part, as well as a slit (23) located there between.

11. Composed element according to claim 10, **characterized in that** at least one boundary surface (24-25-26) of said slit (23) is formed substantially, essentially or wholly in a single wood veneer (54-54A) of said stack.

12. Composed element according to claim 11, **characterized in that** said single veneer (54) in which said boundary surface (24-25-26) is substantially, essentially or wholly formed has a wood grain direction parallel or about parallel to said slit (23).

13. Composed element according to any of the preceding claims, **characterized in that** said stack of wood veneers (54-54A) comprises wood veneer of N, A or B grade quality as defined according to ANSI/HPVA-1. 1994, at at least one outer surface of said stack.

## Patentansprüche

1. Verbundelement, das mindestens zwei Elemente (2) umfasst, die die Form eines Paneels aufweisen und mittels einer Feder-Nut-Verbindung (15, 16) in einem Winkel miteinander gekoppelt werden können, wobei die oben genannte Verbindung an mindestens einem der Elemente (2), die die Form eines Paneels aufweisen, eine Feder (15) oder eine Nut (16) umfasst, die mit einer Nut (16) oder einer Feder (15) zusammenwirken kann, die an dem anderen Element (2), das die Form eines Paneels aufweist, vorgesehen ist; wobei in dem zusammengebauten Zustand eine Verriegelung bewirkt wird; wobei die Elemente (2), die die Form eines Paneels aufweisen, in ihrem normalen, miteinander verbundenen Zustand nicht ohne Überwindung einer bestimmten Kraft voneinander getrennt werden können; und wobei sowohl die oben genannte Feder (15) als auch die oben genannte Nut (16) vollständig aus einem Material auf Holzbasis ausgebildet sind, das aus einem Stapel aus Furnierhölzern (54-54A) hergestellt wird, die miteinander verklebt sind; und wobei die oben genannte Feder (15) ein erstes Verriegelungselement (17) zum Zusammenwirken mit einem zweiten Verriegelungselement (18) umfasst, das in der oben genannten Nut (16) enthalten ist; wobei das Zusammenwirken des ersten Verriegelungselements (17) und des zweiten Verriegelungselements (18) verhindert, dass sich die Feder (15) und die Nut (16) voneinander trennen; wobei bei dem oben genannten Zusammenwirken ein Paar von Kontaktflächen (36-37) zwischen dem ersten Verriegelungselement (17) und dem zweiten Verriegelungselement (18) erzielt wird; und **dadurch gekennzeichnet, dass** mindestens 50 % mindestens einer der oben genannten Kontaktflächen (36-37) in einem einzigen Furnierholz (54-54A) des oben genannten Stapels ausgebildet sind.

2. Verbundelement nach Anspruch 1, **dadurch gekennzeichnet, dass** der Stapel aus Furnierhölzern (54-54A) eine ungerade Anzahl benachbarter Furnierhölzer, vorzugsweise mindestens sieben, umfasst.

3. Verbundelement nach Anspruch 1 oder 2, **dadurch gekennzeichnet, dass** mindestens zwei benachbarte Furnierhölzer (54-54A) in dem Stapel aus Furnierhölzern derart angebracht sind, dass ihre Richtung der Holzmaserungen sich quer oder senkrecht zueinander erstrecken.

4. Verbundelement, das nach einem der vorstehenden Ansprüche ausgebildet ist, **dadurch gekennzeichnet, dass** das oben genannte Material auf Holzbasis ein Material in der Form eines Paneels darstellt, das die Grundstruktur des jeweiligen Elements (2) bildet, das die Form eines Paneels aufweist.

5. Verbundelement, das nach einem der vorstehenden Ansprüche ausgebildet ist, **dadurch gekennzeichnet, dass** mindestens eine der oben genannten Kontaktflächen (36-37) im Wesentlichen oder vollständig in einem einzigen Furnierholz (54-54A) des oben genannten Stapels ausgebildet ist.

6. Verbundelement nach Anspruch 5, **dadurch gekennzeichnet, dass** die Richtung der Holzmaserung des jeweiligen Furnierholzes (54) sich parallel oder annähernd parallel zu der oben genannten Kontaktfläche (36) erstreckt.

7. Verbundelement nach einem der vorstehenden Ansprüche, **dadurch gekennzeichnet, dass** das erste Verriegelungselement (17) an einem ersten Furnierholz (54) ausgebildet ist und das zweite Verriegelungselement (18) an einem zweiten Furnierholz (54A) ausgebildet ist; wobei das erste Furnierholz in seinem jeweiligen Stapel an einer Stelle auf der inneren Seite der oben genannten Ecke oder der inneren Ecke, die durch die beiden Elemente (2), die die Form eines Paneels aufweisen, gebildet wird, näher als die Stelle, an der das zweite Furnierholz in seinem jeweiligen Stapel angebracht ist.

8. Verbundelement nach Anspruch 7, **dadurch gekennzeichnet, dass** das oben genannte erste Furnierholz ein Furnierholz darstellt, das eine äußere Oberfläche seines jeweiligen Stapels bildet, während das oben genannte zweite Furnierholz ein inneres Furnierholz seines jeweiligen Stapels darstellt.

9. Verbundelement, das nach einem der vorstehenden Ansprüche ausgebildet ist, **dadurch gekennzeichnet, dass** mindestens eine der oben genannten Kontaktflächen (36-37) im Wesentlichen oder vollständig aus einem Furnierholz (54-54A) der Qualität N, A oder B ausgebildet ist, wie diese gemäß der Norm ANSI/HPVA-1-1994 definiert ist.

10. Verbundelement nach einem der vorstehenden Ansprüche, **dadurch gekennzeichnet, dass** die oben genannte Feder (15) aus einer geteilten Feder besteht, die somit mindestens einen ersten Teil und einen zweiten Teil sowie einen dazwischen angebrachten Schlitz (23) umfasst.

11. Verbundelement nach Anspruch 10, **dadurch gekennzeichnet, dass** mindestens eine Begrenzungsfläche (24, 25, 26) des oben genannten Schlitzes (23) substanziell, im Wesentlichen oder vollständig in einem einzigen Furnierholz (54-54A) des oben genannten Stapels ausgebildet ist.

12. Verbundelement nach Anspruch 11, **dadurch gekennzeichnet, dass** das einzige Furnierholz (54), in dem die oben genannte Grenzfläche (24-25-26) substanziell, im Wesentlichen oder vollständig ausgebildet ist, eine Richtung der Holzmaserung aufweist, die sich parallel oder annähernd parallel zu dem oben genannten Schlitz (23) erstreckt.

13. Verbundelement nach einem der vorstehenden Ansprüche, **dadurch gekennzeichnet, dass** der Furnierholzstapel (54-54A) an mindestens einer Außenfläche des Stapels Furnierholz der Qualität N, A oder B, wie in der Norm ANSI/HPVA-1-1994 definiert, umfasst.

## Revendications

1. Élément composé qui comprend au moins deux éléments (2) possédant une configuration en forme de panneaux, qui, au moyen d'une liaison de verrouillage du type à languette (15) et à rainure (16), peuvent être accouplés l'un à l'autre en formant un angle ; dans lequel ladite liaison comprend, au moins à un des éléments (2) possédant une configuration en forme de panneaux, une languette (15) ou une rainure (16) qui peuvent coopérer avec une rainure (16) ou une languette (15) qui est prévue sur l'autre élément (2) possédant une configuration en forme de panneau ; dans lequel, à l'état assemblé, un verrouillage est mis en œuvre ; dans lequel les éléments (2) possédant une configuration en forme de panneaux, dans leur état normal mutuellement assemblé, ne peuvent pas être séparés l'un de l'autre sans surmonter certaine force ; et dans lequel à la fois ladite languette (15) et ladite rainure (16) sont complètement réalisées dans un matériau à base de bois que l'on obtient à partir d'une pile de bois de placage (54-54A) qui sont collés les uns aux autres ; et dans lequel ladite languette (15) comprend un premier élément de verrouillage (17) à des fins de coopération avec un deuxième élément de verrouillage (18) qui est compris dans ladite rainure (16) ; dans lequel la coopération du premier élément de verrouillage (17) et du deuxième élément de verrouillage (18) empêche la séparation de la languette (15) et de la rainure (16) l'une par rapport à l'autre ; dans lequel, au cours de ladite coopération, on obtient une paire de surfaces de contact (36-37) entre ledit premier élément de verrouillage (17) et ledit deuxième élément de verrouillage (18) ; et **caractérisé en ce qu'**au moins 50 % d'au moins une desdites surfaces de contact (36-37) sont réalisés dans un seul et unique bois de placage (54-54A) de ladite pile.

2. Élément composé selon la revendication 1, **caractérisé en ce que** ladite pile de bois de placage (54-54A) comprend un nombre impair de bois de placage adjacents, de préférence au moins sept.

3. Élément composé selon la revendication 1 ou 2, **caractérisé en ce qu'**au moins deux bois de placage adjacents (54-54A) sont disposés dans ladite pile de bois de placage d'une manière telle que leurs directions de grain du bois sont transversales ou perpendiculaires l'une par rapport à l'autre.

4. Élément composé selon l'une quelconque des revendications précédentes, **caractérisé en ce que** ledit matériau à base de bois représente un matériau sous la forme d'un panneau qui forme la structure de base de l'élément respectif (2) possédant une configuration en forme de panneau.

5. Élément composé selon l'une quelconque des revendications précédentes, **caractérisé en ce qu'**au moins une desdites surfaces de contact (36-37) est réalisée de manière essentielle ou de manière complète dans un seul bois de placage (54-54A) de ladite pile.

6. Élément composé selon la revendication 5, **caractérisé en ce que** la direction de grain du bois de placage respectif (54) est parallèle ou approximativement parallèle à ladite surface de contact (36).

7. Élément composé selon l'une quelconque des revendications précédentes, **caractérisé en ce que** ledit premier élément de verrouillage (17) est réalisé sur un premier bois de placage (54) et ledit deuxième élément de verrouillage (18) est réalisé sur un deuxième bois de placage (54A) ; dans lequel ledit premier bois de placage est disposé, dans sa pile respective, à un endroit du côté interne dudit angle ou du coin interne formé par lesdits deux éléments (2) possédant une configuration en forme de panneaux, qui est plus proche que l'endroit où est disposé ledit deuxième bois de placage dans sa pile respective.

8. Élément composé selon la revendication 7, **caractérisé en ce que** ledit premier bois de placage représente un bois de placage qui forme une surface externe de sa pile respective, tandis que ledit deuxième bois de placage représente un bois de placage interne de sa pile respective.

9. Élément composé selon l'une quelconque des revendications précédentes, **caractérisé en ce qu'**au moins une desdites surfaces de contact (36-37) est réalisée de manière essentielle ou de manière complète dans un bois de placage (54-54A) de qualité N, A ou B, telle qu'elle est définie en conformité avec la norme ANSI/HPVA-1-1994.

10. Élément composé selon l'une quelconque des revendications précédentes, **caractérisé en ce que** ladite languette (15) est constituée d'une languette fendue qui comprend par conséquent au moins une première partie et une deuxième partie, de même qu'une fente (23) qui est disposée entre les deux.

11. Élément composé selon la revendication 10, **caractérisé en ce qu'**au moins une surface limite (24-25-26) de ladite fente (23) est réalisée de manière substantielle, de manière essentielle ou de manière complète dans un seul et unique bois de placage (54-54A) de ladite pile.

12. Élément composé selon la revendication 11, **caractérisé en ce que** ledit seul et unique bois de placage (54) dans lequel ladite surface limite (24-25-26) est réalisée de manière substantielle, de manière essentielle ou de manière complète, possède une direction du grain du bois qui est parallèle ou approximativement parallèle à ladite fente (23).

13. Élément composé selon l'une quelconque des revendications précédentes, **caractérisé en ce que** ladite pile de bois de placage (54-54A) comprend du bois de placage de qualité N, A ou B, telle qu'elle est définie en conformité avec la norme ANSI/HPVA-1-1994, à au moins une surface externe de ladite pile.
